# EUROPEAN PATENT APPLICATION

(11) **EP 4 644 736 A1**
(43) Date of publication of application: **05.11.2025**
(21) Application number: 23912085.0
(22) Date of filing: 25.12.2023
(51) Int. Cl.: F16J 15/34, F16C 17/04

(54) **SLIDING COMPONENT**

(30) Priority: 26.12.2022 JP 2022208343
(71) Applicant: Eagle Industry Co., Ltd., Minato-ku Tokyo 105-8587 (JP)
(72) Inventor: SUZUKI, Hiroshi, Tokyo 105-8587 (JP); UCHIDA, Kenta, Tokyo 105-8587 (JP); FUKUDA, Shogo, Tokyo 105-8587 (JP); OU, Iwa, Tokyo 105-8587 (JP); IMURA, Tadatsugu, Tokyo 105-8587 (JP)
(74) Representative: WSL Patentanwälte Partnerschaft mbB
(86) International application number: PCT/JP2023/046517
(87) International publication number: WO 2024/143306

(57) **Abstract**

There are provided sliding components capable of enhancing lubrication. In sliding components 10 and 20 of which a pair of sliding surfaces 11 and 21 rotate relative to each other and which partition a sealed fluid space S1 and a leakage space S2 off from each other, at least the sliding surface 11 is provided with a fluid recovery groove 14 including pressure generation portions 143a and 144 that are circumferential end portions, curved portions, or bent portions, and a dynamic pressure generation groove 13 extending from a fluid recovery groove side toward a leakage side.

## Description

### {TECHNICAL FIELD}

The present invention relates to sliding components, for example, sliding components that rotate relative to each other, for example, sliding components used in a shaft sealing device that seals a rotating shaft of a rotating machine in an automobile, a general industrial machine, or other seal fields, or sliding components used in a bearing of a machine in an automobile, a general industrial machine, or other bearing fields.

### {BACKGROUND ART}

For example, a mechanical seal serving as a shaft sealing device that prevents leakage of a sealed fluid includes a pair of annular sliding components which rotate relative to each other and of which sliding surfaces slide on each other. In such a mechanical seal, in recent years, reducing the loss of energy due to sliding has been desired for environmental measures and the like.

For example, in a mechanical seal as described in Patent Citation 1, a plurality of dimples are provided in a circumferential direction on a sliding surface of a stationary seal ring. The dimple is formed in a crank shape including a cavitation formation region and a positive pressure generation region. The cavitation formation region is disposed on a low-pressure fluid side, and is formed in a groove shape extending in the circumferential direction. The positive pressure generation region is disposed on a high-pressure fluid side, and is formed in a groove shape extending in the circumferential direction. In addition, a downstream end of the cavitation formation region in a rotation direction and an upstream end of the positive pressure generation region in the rotation direction communicate with each other.

As a rotating seal ring rotates, the dimple guides a sealed fluid from the cavitation formation region on an upstream side in the rotation direction to the positive pressure generation region on a downstream side in the rotation direction, and generates positive pressure at the downstream end. Since a mating sliding surface floats due to the positive pressure and the sealed fluid is introduced into a gap between the sliding surfaces, the loss of energy due to sliding can be reduced. In addition, the dimple can recover the sealed fluid that has moved to a low-pressure space side, due to the negative pressure generated at the upstream end of the cavitation formation region in the rotation direction.

### {CITATION LIST}

### {Patent Literature}

Patent Citation 1: JP 6058018 B2 (Pages 7 and 8, FIG. 4)

### {SUMMARY OF INVENTION}

### {Technical Problem}

In such sliding components as in Patent Citation 1, since the positive pressure generation region of the dimple is disposed close to a sealed fluid space, a part of the sealed fluid can be recovered on the high-pressure fluid side. However, the positive pressure generation regions of the dimples are disposed to be distributed in the circumferential direction. As a result, since the positive pressure generated in the circumferential direction between the sliding surfaces becomes uneven, a floating balance is difficult to achieve, so that lubrication is impaired, which is a risk.

The present invention has been made in view of such problems, and an object of the present invention is to provide sliding components capable of enhancing lubrication.

### {Solution to Problem}

In order to solve the foregoing problems, sliding components according to the present invention are sliding components of which a pair of sliding surfaces rotate relative to each other and which partition a sealed fluid space and a leakage space off from each other, wherein at least one of the sliding surfaces is provided with a fluid recovery groove including at least one pressure generation portion that is a circumferential end portion, a curved portion, or a bent portion, and a dynamic pressure generation groove extending from a fluid recovery groove side toward a leakage side. According to the aforesaid feature of the present invention, positive pressure can be generated at a plurality of locations in a circumferential direction by the pressure generation portion of the fluid recovery groove and the dynamic pressure generation groove, and the floating balance between the sliding components can be improved, so that lubrication is enhanced.

It may be preferable that the dynamic pressure generation groove communicates with the fluid recovery groove. According to this preferable configuration, since a fluid is supplied from the fluid recovery groove to the dynamic pressure generation groove, positive pressure can be reliably generated in the dynamic pressure generation groove.

It may be preferable that a plurality of the dynamic pressure generation grooves communicate with the fluid recovery groove in a circumferential direction. According to this preferable configuration, positive pressure can be reliably generated at a plurality of locations in the circumferential direction.

It may be preferable that the fluid recovery groove includes a first groove portion extending in a circumferential direction, a second groove portion extending from the first groove portion in a radial direction, and a third groove portion extending from the second groove portion to a side opposite to the first groove portion in the circumferential direction, the pressure generation portion is located at a downstream end portion of the third groove portion, and the dynamic pressure generation groove is provided in communication with the third groove portion. According to this preferable configuration, positive pressure can be efficiently generated using the fluid recovered by the fluid recovery groove.

It may be preferable that the first groove portion is located on a leakage space side with respect to the third groove portion. The dynamic pressure generation groove overlaps, in the radial direction, the first groove portion of the fluid recovery groove adjacent to the fluid recovery groove, with which the dynamic pressure generation groove communicates, on a downstream side in the relative rotation, and overlap the second groove portion in the circumferential direction. According to this preferable configuration, the fluid that has flowed into a gap between the sliding surfaces from the dynamic pressure generation groove can be reliably recovered by the fluid recovery groove on the downstream side in the relative rotation.

It may be preferable that an upstream end of the first groove portion of the fluid recovery groove and a bent portion between the first groove portion and the second groove portion of the adjacent fluid recovery groove on an upstream side in the relative rotation overlap each other in the circumferential direction. According to this preferable configuration, the fluid recovery groove can efficiently recover the sealed fluid that has flowed into the gap between the sliding surfaces from the pressure generation portion of the adjacent fluid recovery groove on the upstream side in the relative rotation.

It may be preferable that the adjacent first groove portions are aligned on one circle line. According to this preferable configuration, since the first groove portions can guide the sealed fluid along the rotation direction, the sealed fluid can be evenly recovered in the circumferential direction.

### {BRIEF DESCRIPTION OF DRAWINGS}

FIG. 1 is a longitudinal sectional view illustrating one example of a mechanical seal including sliding components according to a first embodiment of the present invention.
FIG. 2 is a view of a sliding surface of a stationary seal ring when viewed in an axial direction in the first embodiment.
FIG. 3 is a partially enlarged view of FIG. 2.
FIG. 4 is a view of a sliding surface of a stationary seal ring as one of sliding components according to a second embodiment of the present invention when viewed in the axial direction.
FIG. 5 is a view of a sliding surface of a stationary seal ring as one of sliding components according to a third embodiment of the present invention when viewed in the axial direction.
FIG. 6 is a view of a sliding surface of a stationary seal ring as one of sliding components according to a fourth embodiment of the present invention when viewed in the axial direction.
FIG. 7 is a view of a sliding surface of a stationary seal ring as one of sliding components according to a fifth embodiment of the present invention when viewed in the axial direction.
FIG. 8 is a view of a sliding surface of a stationary seal ring in a modification example of the first embodiment according to the present invention when viewed in the axial direction.

### {DESCRIPTION OF EMBODIMENTS}

Modes for implementing sliding components according to the present invention will be described below based on embodiments.

### {First embodiment}

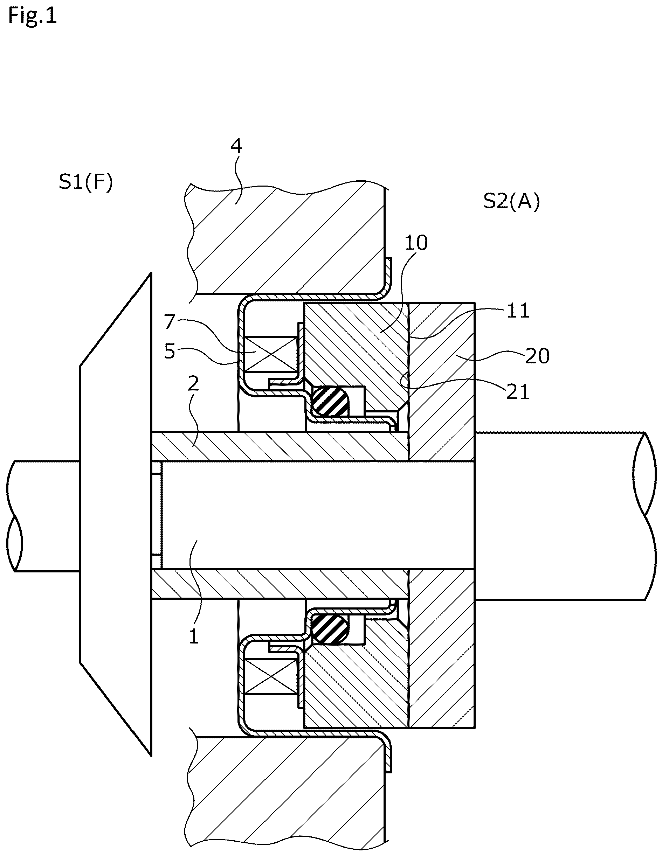

Sliding components according to a first embodiment of the present invention will be described with reference to FIGS. 1 to 3. Incidentally, in the present embodiment, a mode in which the sliding components are applied to a mechanical seal will be described as an example.

In addition, in the mechanical seal, a sealed fluid F serving as a first fluid and atmosphere A serving as a second fluid will be described as existing in an inner space S1 and an outer space S2, respectively, and a radial inner side and a radial outer side of the sliding components constituting the mechanical seal will be described as a sealed fluid space side (high-pressure side) and a leakage space side (low-pressure side), respectively. In addition, for convenience of description, in the drawings, dots may be added to grooves and the like formed on a sliding surface.

A mechanical seal illustrated in FIG. 1 is an outside mechanical seal that seals the sealed fluid F attempting to leak from the radial inner side toward the radial outer side of sliding surfaces, and that allows the outer space S2 to communicate with the atmosphere A. Incidentally, in the present embodiment, a mode in which the sealed fluid F is a high-pressure liquid and the atmosphere A is a gas having a lower pressure than the sealed fluid F will be provided as an example.

The mechanical seal is mainly composed of a stationary seal ring 10 serving as a sliding component having an annular shape, and a rotating seal ring 20 serving as another sliding component having an annular shape. The rotating seal ring 20 is provided on a rotating shaft 1 via a sleeve 2 to be rotatable together with the rotating shaft 1. The stationary seal ring 10 is provided on a seal cover 5, which is fixed to a housing 4 of an attached device, to be non-rotatable and movable in an axial direction. The stationary seal ring 10 is biased in the axial direction by an elastic member 7, and a sliding surface 11 of the stationary seal ring 10 and a sliding surface 21 of the rotating seal ring 20 slide in close contact with each other. Incidentally, the sliding surface 21 of the rotating seal ring 20 is a flat surface, and a recessed portion such as a groove is not provided on the flat surface.

The stationary seal ring 10 and the rotating seal ring 20 are typically made of SiC (hard material) or a combination of SiC (hard material) and carbon (soft material), but are not limited thereto, and any sliding material can be applied as long as the sliding material is used as a sliding material for a mechanical seal. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As the carbon, carbon in which a carbonaceous substance and a graphitic substance are mixed, resin-molded carbon, sintered carbon, and the like can be used. In addition, in addition to the above-described sliding materials, metal materials, resin materials, surface modification materials (coating materials), composite materials, and the like can also be applied.

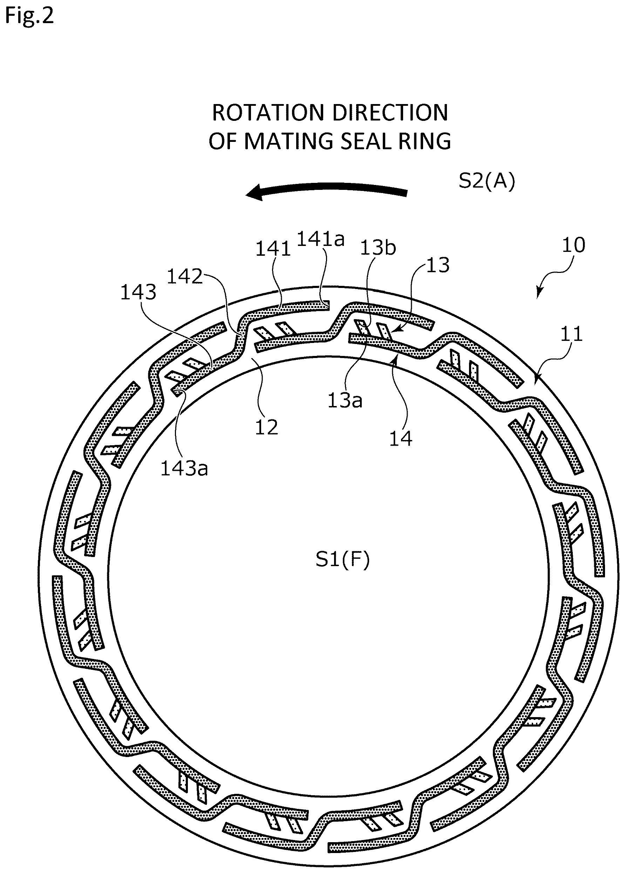

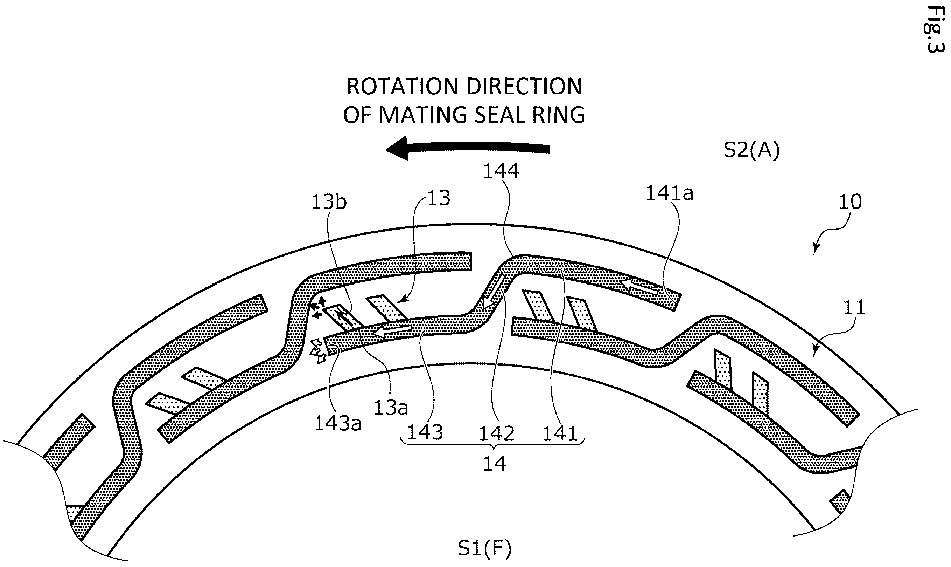

As illustrated in FIGS. 2 and 3, the rotating seal ring 20 that is a mating seal ring slides counterclockwise relative to the stationary seal ring 10 as indicated by a solid arrow.

The sliding surface 11 of the stationary seal ring 10 is provided with a plurality of dynamic pressure grooves 13 serving as dynamic pressure generation grooves and a plurality of pumping grooves 14 serving as fluid recovery grooves. Incidentally, a portion of the sliding surface 11 other than the dynamic pressure grooves 13 and the pumping grooves 14 is a land 12 forming a flat surface.

The pumping grooves 14 are evenly disposed in a circumferential direction on the radial inner side of the sliding surface 11 (for example, 16 in the present embodiment). A first groove portion 141 of each of the pumping grooves 14, which will be described later, partially overlaps a third groove portion 143 of the pumping groove 14, which is disposed on an upstream side in the relative rotation, in a radial direction.

Each of the pumping grooves 14 is composed of the first groove portion 141, a second groove portion 142, and the third groove portion 143. The pumping groove 14 has a substantially S-shape when viewed in the axial direction.

In detail, the first groove portion 141 extends in the circumferential direction from the upstream side in a rotation direction of the rotating seal ring 20 toward a downstream side in the rotation direction, namely, from the upstream side toward the downstream side in the relative rotation direction. Incidentally, it is preferable that the first groove portion 141 has at least a circumferential component, and may have a radial component. Incidentally, in the present invention, it is preferable that the radial direction includes at least a radial component, and similarly, in the present invention, it is preferable that the circumferential direction includes at least a circumferential component.

An end portion 141a of the first groove portion 141 on the upstream side in the rotation direction of the rotating seal ring 20 is closed. An end portion of the first groove portion 141 on the downstream side in the rotation direction of the rotating seal ring 20 communicates with the second groove portion 142.

Incidentally, the end portion 141a of the first groove portion 141 overlaps, in the circumferential direction, a bent portion 144 between the first groove portion 141 and the second groove portion 142 of the pumping groove 14 on the upstream side in the rotation direction of the rotating seal ring 20. Incidentally, being disposed at positions overlapping each other when viewed in the circumferential direction is referred to as overlapping in the circumferential direction in the present invention. Similarly, being disposed at positions overlapping each other when viewed in the radial direction is referred to as overlapping in the radial direction in the present invention. In addition, the bent portion 144 of the present embodiment has a curved shape; however, the present invention is not limited thereto, and the bent portion 144 may have a bent shape.

In addition, the first groove portions 141 are formed in an arc shape with the same curvature, and are disposed on the same circumference. In addition, the curvature of each of the first groove portions 141 is substantially the same as the curvature of the stationary seal ring 10. In addition, one circle is drawn by extending each of the first groove portions 141 in the circumferential direction. Incidentally, the first groove portions 141 may not be disposed on the same circumference.

The second groove portion 142 extends from the end portion of the first groove portion 141 on the downstream side in the rotation direction of the rotating seal ring 20 toward the radial inner side while being inclined to the downstream side in the rotation direction of the rotating seal ring 20. A connecting portion between the first groove portion 141 and the second groove portion 142 is gently curved.

The second groove portion 142 of the present embodiment has a radial component larger than a circumferential component. Incidentally, it is preferable that the second groove portion 142 has at least a radial component. Namely, the second groove portion 142 has a smaller circumferential component and a larger radial component than the first groove portion 141.

The third groove portion 143 extends in the circumferential direction from a radial inner end portion of the second groove portion 142 toward the downstream side in the rotation direction of the rotating seal ring 20. A connecting portion between the second groove portion 142 and the third groove portion 143 is gently curved. Incidentally, it is preferable that the third groove portion 143 has at least a circumferential component, and may have a radial component. Namely, the third groove portion 143 has a larger circumferential component and a smaller radial component than the second groove portion 142. Incidentally, in the present embodiment, the first groove portion 141 and the third groove portion 143 are parallel to each other, but may not be parallel to each other.

An end portion 143a of the third groove portion 143 is closed and functions as a pressure generation portion.

The dynamic pressure grooves 13 extend substantially linearly from the third groove portion 143 of the pumping groove 14 toward the radial outer side while being inclined to the downstream side in the rotation direction of the rotating seal ring 20, namely, to the downstream side in the relative rotation.

In the present embodiment, two dynamic pressure grooves 13 are provided for one pumping groove 14 while being separated from each other in the circumferential direction. Incidentally, it is preferable that at least one dynamic pressure groove 13 is provided for one pumping groove 14, and the number of the dynamic pressure grooves 13 can be freely changed.

A radial inner end 13a of the dynamic pressure groove 13 communicates with the third groove portion 143, and a radial outer end 13b serving as a dynamic pressure generation portion is closed. Incidentally, the dynamic pressure groove 13 is not limited to having a linear shape when viewed in the axial direction, and may be arc-shaped, a Rayleigh step, a spiral groove, herringbone-shaped, or the like.

The dynamic pressure grooves 13 are formed, for example, to the same depth as the pumping grooves 14. Incidentally, the depth of the dynamic pressure grooves 13 may be different from the depth of the pumping grooves 14.

Next, the action of the dynamic pressure grooves 13 and the pumping grooves 14 during relative rotation between the stationary seal ring 10 and the rotating seal ring 20 will be briefly described.

As illustrated in FIG. 3, when the rotating seal ring 20 rotates relative to the stationary seal ring 10, the fluid in the dynamic pressure groove 13 and the pumping groove 14 moves in accordance with the relative rotation of the rotating seal ring 20.

Specifically, in the pumping groove 14, as illustrated by white arrows in FIG. 3, the atmosphere A moves from the end portion 141a toward the end portion 143a. Accordingly, a slight positive pressure is generated at the end portion 143a and in the vicinity thereof. In addition, a slight positive pressure is also generated at the bent portion 144 and in the vicinity thereof. Namely, the bent portion 144 functions as a pressure generation portion of the pumping groove 14.

Meanwhile, in the dynamic pressure groove 13, as illustrated by black arrows in FIG. 3, the fluid moves from the radial inner end 13a toward the radial outer end 13b. Accordingly, positive pressure is generated at the radial outer end 13b and in the vicinity thereof. In addition, the fluid is supplied to the dynamic pressure groove 13 from the pumping groove 14 through the radial inner end 13a.

A part of the fluid discharged into a gap between the sliding surfaces 11 and 21 from the radial outer end 13b of the dynamic pressure groove 13 flows into the pumping groove 14 adjacent thereto in the circumferential direction. Specifically, the fluid flows mainly into the vicinity of the first groove portion 141 and the second groove portion 142 of the pumping groove 14.

A part of the fluid discharged into the gap between the sliding surfaces 11 and 21 from the end portion 143a of the pumping groove 14 flows into the pumping groove 14 adjacent thereto in the circumferential direction. Specifically, the fluid flows mainly into the vicinity of the second groove portion 142 and the third groove portion 143 of the pumping groove 14.

In addition, the sliding surfaces 11 and 21 float apart from each other due to the positive pressure generated in the dynamic pressure groove 13 and the pumping groove 14, so that the sealed fluid F flows into the gap between the sliding surfaces 11 and 21 from the inner space S1. The sealed fluid F that has flowed into the gap between the sliding surfaces 11 and 21 is recovered in the pumping groove 14. Therefore, the sealed fluid F is prevented from leaking into the outer space S2.

As described above, positive pressure can be generated by the radial outer end 13b of the dynamic pressure groove 13 and the end portion 143a of the pumping groove 14. Accordingly, the stationary seal ring 10 can improve the floating balance with the rotating seal ring 20 by generating positive pressure at a plurality of locations, so that lubrication is enhanced.

In addition, the pumping groove 14 of the present embodiment includes two types of closed end portions, namely, the end portion 143a of the pumping groove 14 and the radial outer end 13b of the dynamic pressure groove 13, on the downstream side thereof, and since there are more outflow locations compared to conventional pumping dimples having a crank shape, the relative negative pressure is larger. Therefore, there is less leakage of the sealed fluid F to the outer space S2 side compared to the conventional dimples.

In addition, two dynamic pressure grooves 13 are provided for one pumping groove 14 while being separated from each other in the circumferential direction. Therefore, the stationary seal ring 10 can reliably generate positive pressure at a plurality of locations in the circumferential direction.

In addition, since the plurality of pumping grooves 14 are provided in the circumferential direction, positive pressure can be generated at a plurality of locations in the circumferential direction of the stationary seal ring 10 in a well-balanced manner.

In addition, the dynamic pressure groove 13 is provided in the third groove portion 143 on the downstream side of the pumping groove 14. According to this configuration, positive pressure can be efficiently generated in the dynamic pressure groove 13 using the fluid in the third groove portion 143 of the pumping groove 14, the third groove portion 143 having high pressure.

In addition, the dynamic pressure groove 13 extends from the pumping groove 14 toward the outer space S2, and the first groove portion 141 of the pumping groove 14 on the downstream side in the rotation direction of the rotating seal ring 20 is disposed on the outer space S2 side of the radial outer end 13b of the dynamic pressure groove 13. In other words, the outer space S2 side of the radial outer end 13b of the dynamic pressure groove 13 is covered by the pumping groove 14. According to this configuration, the fluid that has flowed into the gap between the sliding surfaces 11 and 21 from the radial outer end 13b of the dynamic pressure groove 13 can be reliably recovered by the pumping groove 14 on the downstream side in the relative rotation.

In addition, since the flow of the fluid passing through the dynamic pressure groove 13 and the pumping groove 14 is formed over the entire circumference of the stationary seal ring 10, the sealed fluid F is prevented from leaking into the outer space S2.

In addition, since the end portion 141a of the first groove portion 141 overlaps, in the circumferential direction, the bent portion 144 between the first groove portion 141 and the second groove portion 142 of the pumping groove 14 on the upstream side in the rotation direction of the rotating seal ring 20, the fluid that has flowed into the gap between the sliding surfaces 11 and 21 from the bent portion 144 due to the action of the positive pressure generated at the bent portion 144 and in the vicinity thereof can be efficiently recovered.

In addition, since the first groove portions 141 are formed in an arc shape having the same curvature as the sliding surface 11 and are disposed on the same circumference, the first groove portions 141 can guide the sealed fluid F along the rotation direction. In addition, the sealed fluid F that has flowed into the gap between the sliding surfaces 11 and 21 from the bent portion 144 of the adjacent pumping groove 14 on the upstream side in the rotation direction of the rotating seal ring 20 is also easily moved along the rotation direction. Accordingly, the stationary seal ring 10 can evenly recover the sealed fluid F.

Incidentally, in the present embodiment, a mode in which the pumping groove 14 has a substantially S-shape that is gently curved has been provided as an example; however, the pumping groove 14 may have, for example, a crank shape in which a corner portion is bent. In this case, positive pressure can be more easily generated at the corner portion and in the vicinity thereof than in the case of a curved shape.

In addition, in the present embodiment, a mode in which the dynamic pressure groove 13 extends from the pumping groove 14 toward the outer space S2 that is a leakage space has been provided as an example; however, it is preferable that the dynamic pressure generation portion of the dynamic pressure generation groove and the pressure generation portion of the pumping groove are provided at different positions, and for example, the dynamic pressure generation groove may extend toward the sealed fluid space side.

In addition, in the present embodiment, a mode in which the dynamic pressure groove 13 is provided in communication with the third groove portion 143 of the pumping groove 14 has been provided as an example; however, the dynamic pressure groove 13 may be provided in the first groove portion 141 or the second groove portion 142.

In addition, in the present embodiment, the end portion 143a of the pumping groove 14 is closed; however, the end portion 143a of the pumping groove 14 may communicate with the inner space S1. In this case, the pressure generation portion may be provided at a location other than the end portion 143a of the pumping groove 14.

In addition, the shape of the end portion 143a of the pumping groove 14 can be freely changed. For example, the pressure generation portion may be curved to be convex in an extending direction or may have a tapered shape.

In addition, the shape of the radial outer end 13b of the dynamic pressure groove 13 can be freely changed. For example, the dynamic pressure generation portion may be curved to be convex in an extending direction or may have a tapered shape.

In addition, an independent dynamic pressure generation groove may be provided separately from the dynamic pressure groove 13 of the present embodiment.

Incidentally, a mode in which the pumping groove 14 of the present embodiment has a rectangular cross section; however, the cross-sectional shape may be a U-shape, a semicircular shape, or a triangular shape, and may be changed as appropriate. The same applies to the dynamic pressure groove 13.

### {Second embodiment}

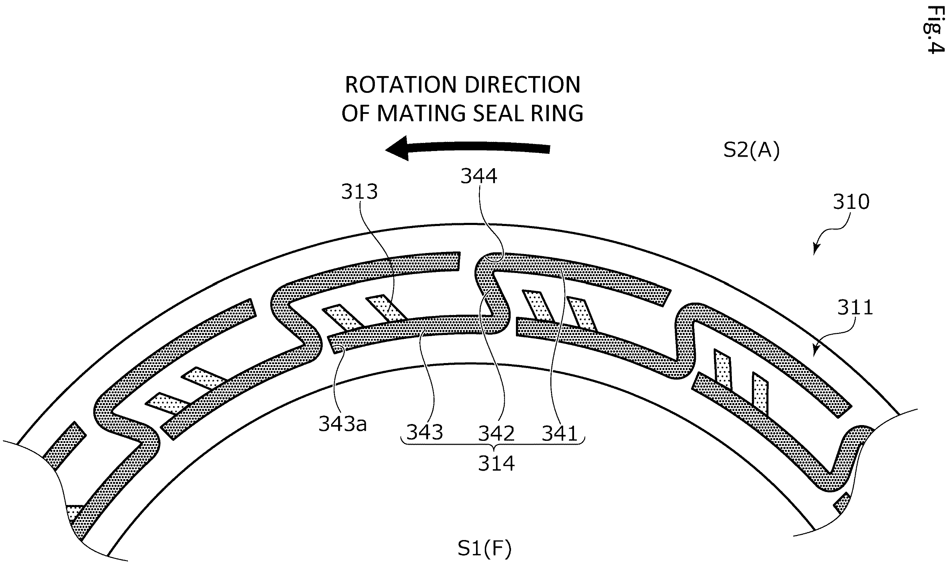

Next, a sliding component as one of sliding components according to a second embodiment of the present invention will be described with reference to FIG. 4. Incidentally, the description of configurations that are the same as and overlap with the configurations of the first embodiment will be omitted.

As illustrated in FIG. 4, a sliding surface 311 of a stationary seal ring 310 of the second embodiment is provided with a plurality of pumping grooves 314 and a plurality of dynamic pressure grooves 313.

Each of the pumping grooves 314 is composed of a first groove portion 341, a second groove portion 342, and a third groove portion 343.

The second groove portion 342 extends in an arc shape from an end portion of the first groove portion 341 on the downstream side in the rotation direction of the rotating seal ring 20 toward the inner space S1 so as to be convex toward the radial inner side. Accordingly, a bent portion 344 between the first groove portion 341 and the second groove portion 342 of the pumping groove 314 is formed at a more acute angle than the bent portion 144 of the first embodiment. The bent portion 344 is a curved portion of the pumping groove 314, and functions as a pressure generation portion of the pumping groove 314.

According to this configuration, positive pressure is easily generated not only in the dynamic pressure groove 313 and an end portion 343a of the third groove portion 343 but also in the vicinity of the bent portion 344.

### {Third embodiment}

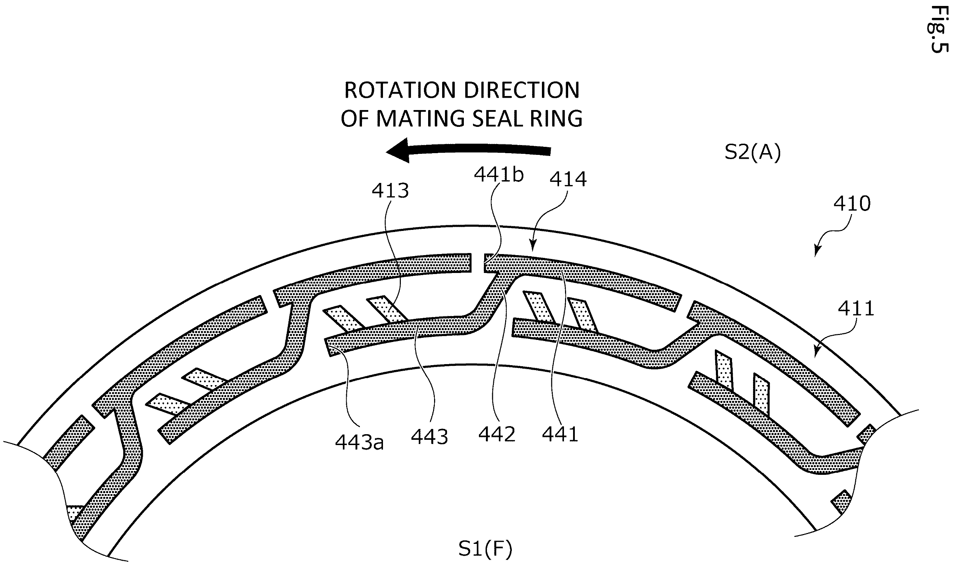

Next, a sliding component as one of sliding components according to a third embodiment of the present invention will be described with reference to FIG. 5. Incidentally, the description of configurations that are the same as and overlap with the configurations of the first embodiment will be omitted.

A plurality of pumping grooves 414 and a plurality of dynamic pressure grooves 413 are formed on a sliding surface 411 of a stationary seal ring 410 of the third embodiment.

The pumping groove 414 communicates with a second groove portion 442 at a position away to the upstream side from an end portion 441b of a first groove portion 441, the end portion 441b serving as a pressure generation portion and located on the downstream side in the relative rotation of the rotating seal ring 20.

According to this configuration, positive pressure can be easily generated not only in the dynamic pressure groove 413 and an end portion 443a of a third groove portion 443 but also at the end portion 441b of the first groove portion 441 and in the vicinity thereof. In addition, another part of the fluid that has flowed into the gap between the sliding surfaces from the end portion 441b is recovered by the first groove portion 441 of the pumping groove 414 on the downstream side in the relative rotation. In addition, the pumping groove 414 guides the sealed fluid F in the first groove portion 441 into the third groove portion 443 more easily than the pumping groove 314 of the second embodiment.

### {Fourth embodiment}

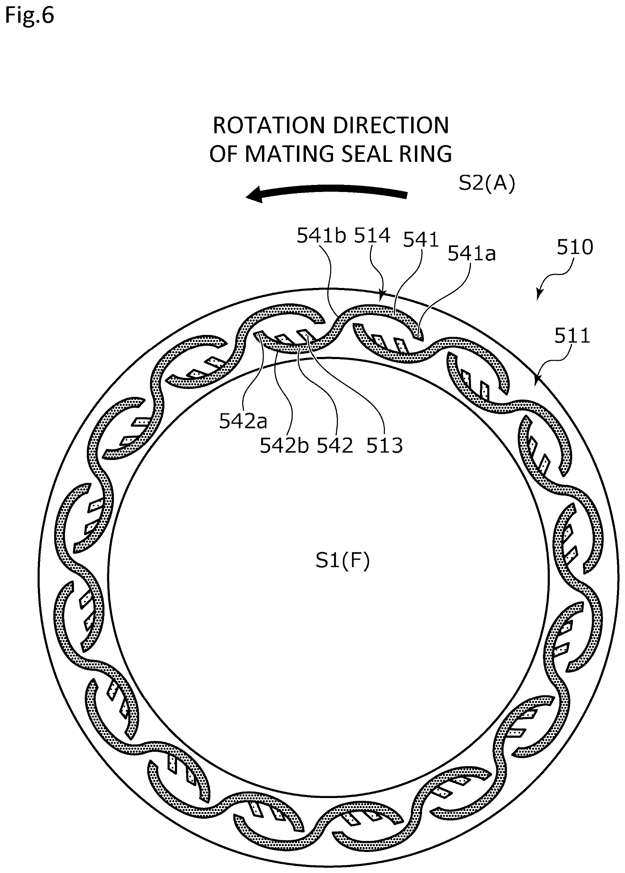

Next, a sliding component as one of sliding components according to a fourth embodiment of the present invention will be described with reference to FIG. 6. Incidentally, the description of configurations that are the same as and overlap with the configurations of the first embodiment will be omitted.

A plurality of pumping grooves 514 and a plurality of dynamic pressure grooves 513 are formed on a sliding surface 511 of a stationary seal ring 510 of the fourth embodiment.

Each of the pumping grooves 514 is composed of a first curved groove portion 541 and a second curved groove portion 542.

The first curved groove portion 541 is formed in an arc shape that is convex toward the radial outer side, and that has a substantially constant curvature smaller than the curvature of the bent portion 144 of the first embodiment. An end portion of the first curved groove portion 541 on the downstream side in the rotation direction of the rotating seal ring 20 communicates with the second curved groove portion 542. An end portion 541a of the first curved groove portion 541 on the upstream side in the rotation direction of the rotating seal ring 20 is closed.

In addition, the first curved groove portion 541 includes a curved portion 541b extending from a circumferential center of the first curved groove portion 541 to the radial inner side and the downstream side in the rotation direction of the rotating seal ring 20 toward the second curved groove portion 542. A slight positive pressure is generated at the curved portion 541b. In such a manner, the curved portion 541b functions as a pressure generation portion of the pumping groove 514.

According to this configuration, the pumping groove 514 of the present embodiment further suppresses the generation of positive pressure at the curved portion 541b, and more easily guides the fluid, which is recovered into the first curved groove portion 541, to the second curved groove portion 542, compared to the pumping groove 14 of the first embodiment.

The second curved groove portion 542 has substantially the same as a shape obtained by inverting the first curved groove portion 541 in the radial direction and the circumferential direction. An end portion 542a of the second curved groove portion 542 on the downstream side in the rotation direction of the rotating seal ring 20 is closed. An end portion of the second curved groove portion 542 on the upstream side in the rotation direction of the rotating seal ring 20 communicates with the first curved groove portion 541. In addition, the second curved groove portion 542 communicates with two dynamic pressure grooves 513.

In addition, the second curved groove portion 542 includes a curved portion 542b extending from a circumferential center of the second curved groove portion 542 to the radial outer side and the downstream side in the rotation direction of the rotating seal ring 20 toward the end portion 542a. A slight positive pressure is generated at the curved portion 542b. In such a manner, the curved portion 542b functions as a pressure generation portion of the pumping groove 514.

In addition, in the pumping groove 514, since the end portion 542a of the second curved groove portion 542 extends toward the downstream side in the rotation direction and the radial outer side, dynamic pressure can be generated at a position that is close to a radial outer end 513b of each of the dynamic pressure grooves 513 in the radial direction. In such a manner, the curved portion 542b functions as a pressure generation portion at a circumferential end portion of the pumping groove 514 on the downstream side in the relative rotation direction.

### {Fifth embodiment}

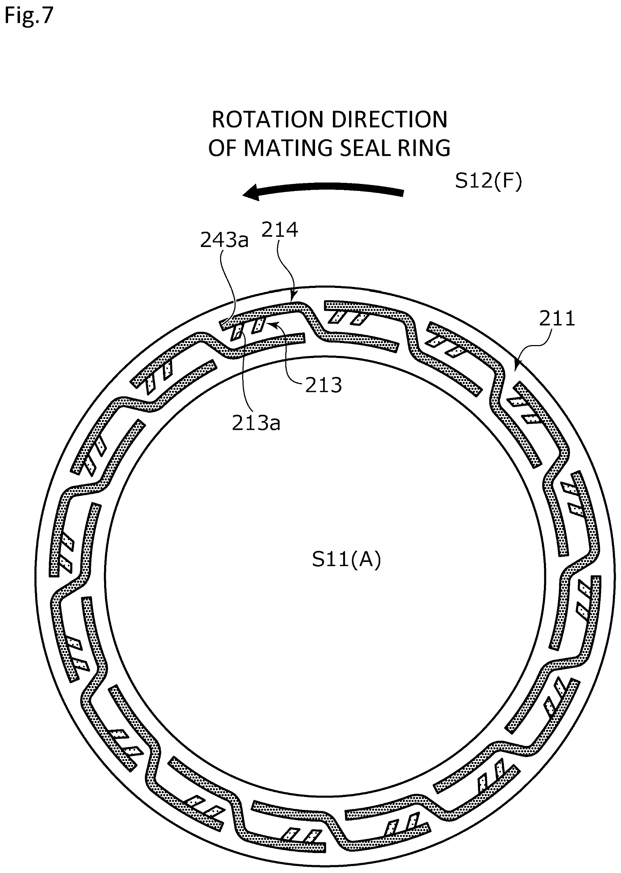

Next, a sliding component as one of sliding components according to a fifth embodiment of the present invention will be described with reference to FIG. 7. Incidentally, the description of configurations that are the same as and overlap with the configurations of the first embodiment will be omitted.

A mechanical seal to which a stationary seal ring 210 of the fifth embodiment is applied is an inside mechanical seal that seals the sealed fluid F existing on an outer space S12 side of sliding surfaces 211 and 21, and that allows an inner space S11 to communicate with the atmosphere A.

A plurality of pumping grooves 214 and a plurality of dynamic pressure grooves 213 are formed on the sliding surface 211.

The pumping groove 214 and the dynamic pressure groove 213 have a shape obtained by substantially inverting the pumping groove 14 and the dynamic pressure groove 13 of the first embodiment in the radial direction.

Accordingly, as illustrated by solid arrows, positive pressure is generated at an end portion 243a of the pumping groove 214 and in the vicinity thereof due to the rotation of the rotating seal ring 20. In addition, positive pressure is generated at a radial inner end 213a of the dynamic pressure groove 213 and in the vicinity thereof.

In such a manner, the sliding components of the present invention may be applied to an environment in which the sealed fluid space is located on the radial outer side of the sliding surfaces and the leakage space is located on the radial inner side of the sliding surfaces.

The embodiments of the present invention have been described above with reference to the drawings; however, specific configurations are not limited to these embodiments, and modifications or additions that are made without departing from the scope of the present invention are also included in the present invention.

For example, in the first to fifth embodiments, the mechanical seal for an automobile has been described as an example of the sliding components; however, the present invention may be applied to other mechanical seals for general industrial machines and the like. In addition, the present invention is not limited to the mechanical seal, and may be applied to sliding components other than the mechanical seal, such as a slide bearing.

In addition, in the first to fifth embodiments, the sealed fluid has been described as a high-pressure liquid; however, the present invention is not limited thereto, and the sealed fluid may be a gas or a low-pressure liquid or may be a mist mixture of liquid and gas.

In addition, in the first to fifth embodiments, the fluid on the leakage space side has been described as the atmosphere that is a low-pressure gas; however, the present invention is not limited thereto, and the fluid may be a liquid or a high-pressure gas or may be a mist mixture of liquid and gas.

In addition, in the first to fifth embodiments, the sealed fluid space side and the leakage space side have been described as a high-pressure side and a low-pressure side, respectively; however, the sealed fluid space side and the leakage space side may be a low-pressure side and a high-pressure side, respectively, or the sealed fluid space side and the leakage space side may have substantially the same pressure.

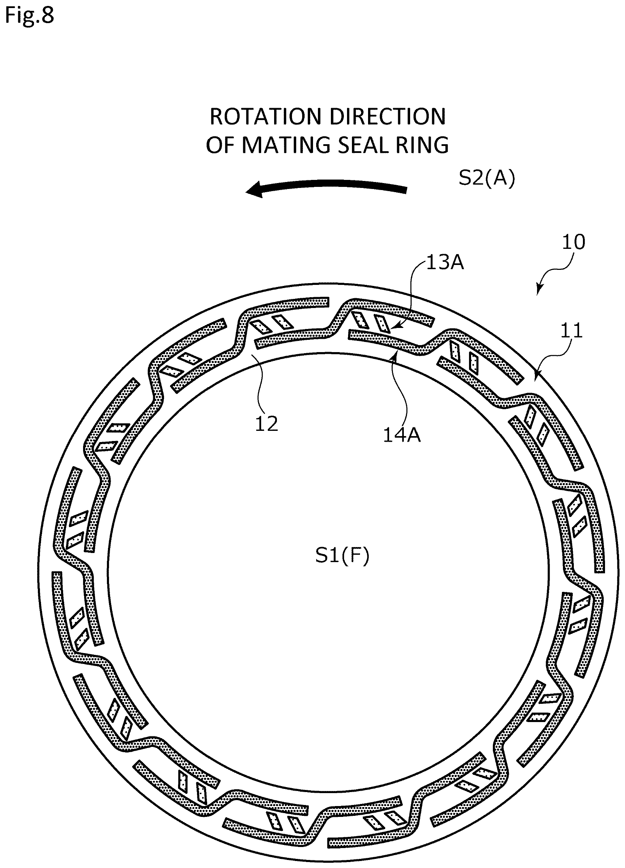

In addition, in the first to fifth embodiments, a mode in which the dynamic pressure generation groove and the fluid recovery groove communicate with each other has been described; however, the present invention is not limited thereto, and the dynamic pressure generation groove and the fluid recovery groove may not communicate with each other. For example, as a modification example of the first embodiment, as illustrated in FIG. 8, a dynamic pressure generation groove 13A and a fluid recovery groove 14A may not communicate with each other.

In addition, in the first to fifth embodiments, an example in which the dynamic pressure generation grooves and the fluid recovery grooves are provided in the stationary seal ring has been described; however, the dynamic pressure generation grooves and the fluid recovery grooves may be provided in the rotating seal ring.

### {REFERENCE SIGNS LIST}

- 10: Stationary seal ring (sliding component)
- 11: Sliding surface
- 13: Dynamic pressure groove (dynamic pressure generation groove)
- 13b: Radial outer end (dynamic pressure generation portion)
- 14: Pumping groove (fluid recovery groove)
- 20: Rotating seal ring (sliding component)
- 21: Sliding surface
- 141: First groove portion
- 142: Second groove portion
- 143: Third groove portion
- 143a: End portion (pressure generation portion)
- 144: Bent portion (pressure generation portion)
- A: Atmosphere (fluid on leakage space side)
- F: Sealed fluid
- S1: Inner space (sealed fluid space)
- S2: Outer space (leakage space)

## Claims

1. Sliding components of which a pair of sliding surfaces rotate relative to each other and which partition a sealed fluid space and a leakage space off from each other,
wherein at least one of the sliding surfaces is provided with a fluid recovery groove including at least one pressure generation portion that is a circumferential end portion, a curved portion, or a bent portion, and a dynamic pressure generation groove extending from a fluid recovery groove side toward a leakage side.

2. The sliding components according to claim 1,
wherein the dynamic pressure generation groove communicates with the fluid recovery groove.

3. The sliding components according to claim 2,
wherein a plurality of the dynamic pressure generation grooves communicate with the fluid recovery groove in a circumferential direction.

4. The sliding components according to claim 1,
wherein the fluid recovery groove includes a first groove portion extending in a circumferential direction, a second groove portion extending from the first groove portion in a radial direction, and a third groove portion extending from the second groove portion to a side opposite to the first groove portion in the circumferential direction, the pressure generation portion is located at a downstream end portion of the third groove portion, and the dynamic pressure generation groove is provided in communication with the third groove portion.

5. The sliding components according to claim 4,
wherein the first groove portion is located on a leakage space side with respect to the third groove portion, and
the dynamic pressure generation groove overlaps, in the radial direction, the first groove portion of the fluid recovery groove adjacent to the fluid recovery groove, with which the dynamic pressure generation groove communicates, on a downstream side in the relative rotation, and overlaps the second groove portion in the circumferential direction.

6. The sliding components according to claim 4,
wherein an upstream end of the first groove portion of the fluid recovery groove and a bent portion between the first groove portion and the second groove portion of the adjacent fluid recovery groove on an upstream side in the relative rotation overlap each other in the circumferential direction.

7. The sliding components according to claim 4,
wherein the adjacent first groove portions are aligned on one circle line.
